# EUROPÄISCHE PATENTANMELDUNG

(11) **EP 2 765 220 A1**
(43) Veröffentlichungstag der Anmeldung: **13.08.2014**
(21) Anmeldenummer: 13154926.3
(22) Anmeldetag: 12.02.2013
(51) Int. Cl.: C23C 30/00, B23K 20/12

(54) **Fügeverbindungsvorformling, Verfahren zum Fügen sowie Verbundwerkstück**

(71) Anmelder: Siemens Aktiengesellschaft, 80333 München (DE)
(72) Erfinder: Burbaum, Bernd, 14612 Falkensee (DE)

(57) **Zusammenfassung**

Die Erfindung betrifft einen Fügeverbindungsvorformling umfassend zumindest einen ersten Fügepartner (1) mit einer ersten Fügefläche (11) und einen zweiten Fügepartner (2,20) mit einer zweiten Fügefläche (12,120), welche zur Fügung an der erste Fügeflächen (11) vorgesehen ist, und wobei der erste Fügepartner (1) einen ersten Gehalt an härtender intermetallischer Phase umfasst, wobei
- der zweite Fügepartner (2,20) einen zweiten Gehalt an härtender intermetallischer Phase umfasst,
- auf der ersten Fügefläche (11) ein erster Gradientenüberzug (8) mit einer ersten Gradientenüberzugoberfläche (8a) aufgebracht ist, wobei der erste Gradientenüberzug (8) einen Gehalt an härtender intermetallischer Phase aufweist, welcher senkrecht zur ersten Fügefläche (11) ausgehend von der ersten Gradientenüberzugoberfläche (8a) bis zu der ersten Fügefläche (11) zunimmt, solange bis der Gehalt an härtender intermetallischer Phase des ersten Gradientenüberzugs (8) nur noch geringe oder keine Abweichung von dem ersten Gehalt an härtender intermetallischer Phase des ersten Fügepartners (1) aufweist.

Ferner betrifft die Erfindung ein Verfahren zum Fügen sowie Verbundwerkstück, welches mit dem Verfahren hergestellt wurde.

## Beschreibung

Die Erfindung betrifft einen Fügeverbindungsvorformling umfassend zumindest einen ersten Fügepartner mit einer ersten Fügefläche und einen zweiten Fügepartner mit einer zweiten Fügefläche, welche zur Fügung an der erste Fügeflächen vorgesehen ist, wobei der erste Fügepartner einen ersten Gehalt an härtender intermetallischer Phase umfasst. Weiterhin betrifft die Erfindung ein Verfahren zum Fügen und ein Verbundwerkstück.

Beim linearen Reibschweißen wird die Energiezufuhr durch eine lineare Relativbewegung der Fügepartner zueinander eingebracht. Durch die Relativbewegung der Bauteile und durch Druck wird die für die Schweißung erforderliche Energie in Form von Wärme erzeugt. Diese Wärmeerzeugung führt im Vergleich zu den Schmelzschweißverfahren zu einer niedrigeren Fügetemperatur, die unterhalb der Schmelztemperatur der zu verbindenden Werkstoffe liegt. Beim linearen Reibschweißen von ausscheidungshärtbaren Nickelbasis-Superlegierungen mit hohem Gehalt an härtender γ'-Phase (gamma-strich-Phase) belasten große Scherkräfte die Einspannvorrichtung der Werkzeugmaschine. Speziell, wenn beide Fügepartner einen hohen Gehalt an härtender γ'-Phase aufweisen, können die zu fügenden Flächengrößen aufgrund der Kräfte limitiert sein.

Bislang wird das lineare Reibschweißen daher nur für das Fügen von Nickelbasis-Superlegierungen eingesetzt, bei denen nur ein Fügepartner einen hohen Gehalt an härtender γ'-Phase enthält. Der zweite Fügeparameter besteht aus einer Nickelbasis-Superlegierung ohne Gehalt an härtender γ'-Phase. Ein Reibschweißen von Fügepartnern von denen jeweils beide ein hohes Gehalt an härtender γ'-Phase aufweisen, ist bislang nicht hinreichend untersucht.

Eine erste Aufgabe der Erfindung ist daher die Angabe eines Fügeverbindungsvorformlings, welcher das oben genannte Problem löst. Eine zweite Aufgabe ist die Angabe eines Verfahrens zum Fügen, welches das oben genannte Problem löst. Eine dritte Aufgabe der Erfindung ist die Angabe eines, insbesondere unter Zuhilfenahme des obigen Verfahrens, gefertigten Verbundwerkstückes.

Erfindungsgemäß wird die erste Aufgabe mit der Angabe eines Fügeverbindungsvorformlings gemäß dem Oberbegriff des Anspruchs 1 durch die folgenden Merkmale gelöst, wobei:
- ein zweiter Fügepartner einen zweiten Gehalt an härtender intermetallischer Phase umfasst,
- auf einer ersten Fügefläche ein erster Gradientenüberzug mit einer ersten Gradientenüberzugoberfläche aufgebracht ist, wobei der erste Gradientenüberzug einen Gehalt an härtender intermetallischer Phase aufweist, welcher senkrecht zu einer ersten Fügefläche, ausgehend von der ersten Gradientenüberzugoberfläche bis zu der ersten Fügefläche zunimmt, solange bis der Gehalt an härtender intermetallischer Phase des ersten Gradientenüberzugs nur noch geringe oder keine Abweichung von einem ersten Gehalt an härtender intermetallischer Phase eines ersten Fügepartners aufweist.

Erfindungsgemäß bewirkt der Gradientenüberzug, dass die Fügefläche der beiden "harten" Fügepartner, das heißt mit hohem Gehalt an härtender intermetallischer Phase, erstmal nicht direkt aneinander reibgeschweißt werden. Während des Reibvorgangs wird derjenige Teil des Gradientüberzugs, welcher einen geringeren und spröderen Gehalt an intermetallischer Phase als der erste Fügepartner aufweist, zumindest teilweise abgerieben und lagert sich in einer Fügeflächenzone, insbesondere dort im Randbereich der Fügeflächenzone, an. Der Gradientenüberzug wird daher während des Reibschweißens immer mehr abgerieben. Da sich dabei der Gehalt an intermetallischer Phase im Fügeprozess erhöht, nimmt die Belastung der den Fügeprozess ausführenden Werkzeugmaschine und der Fügepartner zu. Ist ein kritischer Belastungspunkt erreicht, so wird der Fügevorgang unterbrochen. Die Fügepartner können anschließend z.B. durch eine Anpresskraft weiter gefügt werden. Durch die Vermeidung der kritischen Belastung der Werkzeugmaschine kann die Lebensdauer der Werkzeugmaschinen verlängert werden. Auch kann durch die Vermeidung einer kritischen Belastung der Fügepartner die Qualität der Reibschweißung erhöht werden; Risse können dadurch vermieden werden. Zudem kann die Steifigkeit der Werkzeugmaschine verkleinert werden. Dadurch ergeben sich geringere Investitionskosten.

Bevorzugt ist die intermetallische Phase eine härtende γ'-Phase. Diese kommt besonders bei Nickelbasis-Superlegierungen vor. Nickelbasis-Superlegierungen mit hohem Gehalt an γ'-Phasen sind, insbesondere für den Einsatz in Kraftwerken mit hohen Temperaturen und dadurch für hohe Belastungen geeignet. Es kommen aber auch andere intermetallische Phasen in Betracht.

In bevorzugter Ausgestaltung ist auf der zweiten Fügefläche ein zweiter Gradientenüberzug mit einer zweiten Gradientenüberzugoberfläche vorgesehen, wobei der zweite Gradientenüberzug einen Gehalt an härtender intermetallischer Phase aufweist, welcher senkrecht zur zweiten Fügefläche ausgehend von der zweiten Gradientenüberzugoberfläche bis zu der zweiten Fügefläche zunimmt, solange bis der Gehalt an härtender intermetallischer Phase des zweiten Gradientenüberzugs nur noch geringe oder keine Abweichung mehr von dem Gehalt an härtender intermetallischer Phase des zweiten Fügepartners aufweist. Somit werden während des Schweißvorgangs die beiden Gradientenüberzüge mit dem geringeren Gehalt an härtender und somit spröder intermetallischer Phase abgerieben und lagern sich als Abrieb an der Fügeflächenzone ab. Durch die beidseitigen Gradientenüberzüge werden die Werkzeugmaschinen zunächst noch definierter belastet; der Belastungsgrad nimmt zudem langsamer zu. Der kritische Belastungspunkt kann genauer definiert werden.

Bevorzugt ist der erste Gradientenüberzug als eine Beschichtung der ersten Fügefläche vorgesehen. Bevorzugt ist auch der zweite Gradientenüberzug als eine Beschichtung der zweiten Fügefläche vorgesehen. Dies kann z.B. mittels Laserstahl-Auftragsschweißen erfolgen. Dadurch lassen sich die Gradientenüberzüge besonders gut und leicht aufbringen.

Bevorzugt nimmt bei dem ersten Gradientenüberzug und/oder dem zweiten Gradientenüberzug der Gehalt an härtender intermetallischer Phase, ausgehend von der Gradientenüberzugoberfläche in Richtung Fügefläche kontinuierlich zu.

Dabei weist der erste Gradientenüberzug in Richtung Gradientenüberzugoberfläche bevorzugt eine erste Höhe auf, wobei der Gehalt der härtenden intermetallischen Phase in jeder Höhenlage des ersten Gradientenüberzugs identisch ist. Auch der zweite Gradientenüberzug weist bevorzugt in Richtung zweiter Gradientenüberzugoberfläche eine zweite Höhe auf, wobei der Gehalt der härtenden intermetallischen Phase in jeder Höhenlage des zweiten Gradientenüberzugs identisch ist. Dadurch nimmt auch die Belastung der Werkzeugmaschinen nicht sprunghaft oder unstetig, sondern kontinuierlich zu, da sich der Gehalt an härtender intermetallischer Phase im reibenden Gefüge ebenfalls kontinuierlich erhöht. Somit kann die auftretende Belastung der zum Schweißen verwendeten Werkzeugmaschinen und der Fügepartner besser kontrolliert werden. Erreicht die Belastung einen kritischen Punkt, so wird der Fügevorgang unterbrochen.

Erfindungsgemäß wird die zweite Aufgabe mit der Angabe eines Verfahrens zum Schweißen mit den folgenden Schritten gelöst:
- Bereitstellen eines ersten Fügepartners mit einer ersten Fügefläche und mit einem ersten Gehalt an härtender intermetallischer Phase,
- Bereitstellen eines zweiten Fügepartners mit einer zweiten Fügefläche und mit einem zweiten Gehalt an härtender intermetallischer Phase,
- Anbringen eines ersten Gradientenüberzugs mit einer ersten Gradientenüberzugoberfläche an der ersten Fügefläche des ersten Fügepartners, wobei der erste Gradientenüberzug einen Gehalt an intermetallischer Phase aufweist, welcher senkrecht zur ersten Fügefläche ausgehend von der Gradientenüberzugoberfläche bis zu der ersten Fügefläche zunimmt, solange bis der Gehalt an intermetallischer Phase des ersten Gradientenüberzugs nur noch geringe oder keine Abweichung vom dem Gehalt an intermetallischer Phase des ersten Fügepartners aufweist,
- Reiben des zweiten Fügepartners mit dem ersten Gradientenüberzug des ersten Fügepartners und zwar dergestalt, dass beim Reiben der Teil des ersten Gradientenüberzugs mit einem geringeren Gehalt an intermetallischer Phase als der erste Fügepartner zumindest teilweise abgerieben wird, und zwar so lange bis ein kritischer Belastungspunkt erreicht ist.

Wie oben schon erwähnt, wird, dadurch, dass der Gradientenüberzug einen geringeren Gehalt an intermetallischer Phase aufweist als der Fügepartner, die Belastung zunehmend mit dem Abrieb gesteigert. Es ist dadurch möglich nur solange zu Reiben, bis ein kritischer Belastungspunkt erreicht worden ist. Das bedeutet, dass sowohl die Werkzeugmaschinen als auch die Fügepartner nur unterhalb dieses Belastungspunktes belastet werden. Dadurch kann das Prozessfenster verkleinert werden. Zudem kann die Steifigkeit der Werkzeugmaschine verkleinert werden. Dadurch ergeben sich außerdem geringere Investitionskosten.

Bevorzugt wird als intermetallische Phase eine γ'-Phase bereitgestellt. Bevorzugt wird auf der zweiten Fügefläche ein zweiter Gradientenüberzug mit einer zweiten Gradientenüberzugoberfläche aufgebracht, wobei der zweite Gradientenüberzug einen Gehalt an intermetallischer Phase aufweist, welcher senkrecht zur zweiten Fügefläche, ausgehend von der zweiten Gradientenüberzugoberfläche bis zu der zweiten Fügefläche zunimmt, solange bis der Gehalt an intermetallischer Phase des zweiten Gradientenüberzugs nur noch geringe oder keine Abweichung mehr vom dem Gehalt an intermetallischer Phase des zweiten Fügepartners aufweist, und wobei der zweite Gradientenüberzug mit dem ersten Gradientenüberzug reibgeschweißt wird und zwar dergestalt, dass beim Reiben sowohl der Teil des ersten Gradientenüberzugs mit einem geringeren Gehalt an intermetallischer Phase als der erste Fügepartner zumindest teilweise abgerieben wird, als auch der Teil des zweiten Gradientenüberzugs mit einem geringeren Gehalt an intermetallischer Phase als der zweite Fügepartner zumindest teilweise abgerieben wird, und zwar so lange bis ein kritischer Belastungspunkt erreicht ist. Bevorzugt weist der erste Gradientenüberzug ein intermetallisches Gehalt auf, welches senkrecht zur ersten Fügefläche ausgehend von der ersten Gradientenüberzugoberfläche bis zu der ersten Fügefläche kontinuierlich zunimmt, und wobei der zweite Gradientenüberzug einen Gehalt an intermetallischer Phase aufweist, welcher senkrecht zur zweiten Fügefläche ausgehend von der zweiten Gradientenüberzugoberfläche bis zu der zweiten Fügefläche kontinuierlich zunimmt.

Während des Reibens werden die Anteile des Gradientenüberzugs mit spröder und niedriger intermetallischer Phase kontinuierlich abgerieben und lagern sich im Randbereich der Fügeflächenzone an. Dadurch nimmt die Belastung der Werkzeugmaschinen kontinuierlich zu, da sich der Gehalt an intermetallischer Phase im Gefüge kontinuierlich erhöht. Erreicht die Belastung einen kritischen Punkt, wird der Reibvorgang unterbrochen.

In bevorzugter Ausgestaltung wird beim Reiben das Material, welches durch den Abrieb des ersten Gradientenüberzugs und/oder des zweiten Gradientenüberzugs entsteht, in einem Randbereich der Fügeflächen abgelagert. Dort kann das Material besonders einfach beispielsweise durch Drehen oder Fräsen entfernt werden.

Bevorzugt wird das Reiben durch lineares Reibschweißen vorgenommen. Dieses Fügeverfahren zeichnet sich durch eine niedrige Fügetemperatur aus.

Erfindungsgemäß wird die dritte Aufgabe mit der Angabe eines Verbundwerkstückes, welches mit obigem Verfahren hergestellt wurde, gemäß dem Oberbegriff des Anspruchs 15 durch die folgenden Merkmale gelöst, wobei:
ein erster Fügepartner als auch ein zweiter Fügepartner einen hohen Gehalt an härtender intermetallischer Phase aufweisen und wobei sowohl der erste Fügepartner als auch der zweite Fügepartner nach dem Reiben durch die Anwendung eines Gradientenüberzugs auf zumindest einer der beiden Fügeflächen lediglich geringe bis gar keine Beschädigung, insbesondere durch Rissbildung oder Schrumpfung, aufweisen.

Weitere Merkmale, Eigenschaften und Vorteile der vorliegenden Erfindung ergeben sich aus der nachfolgenden Beschreibung unter Bezugnahme auf die beiliegenden Figuren. Darin zeigt schematisch:
- FIG 1:: einen ersten erfindungsgemäßen Fügeverbindungsvorformling,
- FIG 2:: einen zweiten erfindungsgemäßen Fügeverbindungsvorformling.

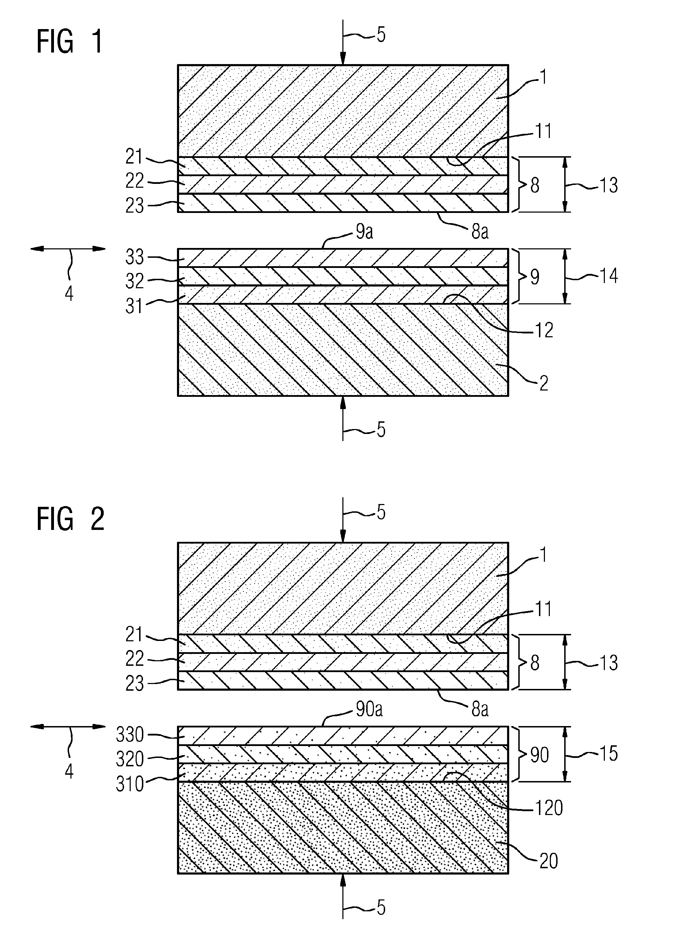

FIG 1 zeigt einen Fügeverbindungsvorformling mit einem ersten Fügepartner 1 mit einer ersten Fügefläche 11 und einem zweiten Fügepartner 2 mit einer zweiten Fügefläche 12. Die erste Fügefläche 11 und die zweite Fügefläche 12 bilden eine Fügeflächenzone aus. Dabei besteht der erste Fügepartner 1 aus einem Grundwerkstoff, der einen ersten Gehalt an härtender intermetallischer Phase aufweist. Nachfolgend wird als intermetallische Phase die aushärtende γ'-Phase herangezogen. Dies kann beispielsweise eine Nickelbasis-Superlegierung mit einem ersten hohen Gehalt, insbesondere 30-40% von dem Grundwerkstoff an γ'-Phase sein. Zudem weist der zweite Fügepartner 2 einen zweiten hohen Gehalt an härtender γ'-Phase auf. Dies kann beispielsweise ebenfalls eine Nickelbasis-Superlegierung mit einem hohen Gehalt, insbesondere 30-40% von dem Grundwerkstoff, an γ'-Phase sein.

Die beiden Fügepartner 1,2 können dabei einen artgleichen Grundwerkstoff mit genau demselben oder ähnlichen Gehalt an härtender γ'-Phase aufweisen oder einen artähnlichen Grundwerkstoff mit genau demselben oder ähnlichen Gehalt an härtender γ'-Phase. Dabei ist in FIG 1 der Gehalt an γ'-Phase des ersten Fügepartners 1 gleich dem Gehalt an γ'-Phase des zweiten Fügepartners 2. In FIG 1 wird erfindungsgemäß die erste Fügefläche 11 mit einem ersten Gradientenüberzug 8 beschichtet. Zudem wird in FIG 1 die zweite Fügefläche 12 mit einem zweiten Gradientenüberzug 9 beschichtet. Die Beschichtung kann mittels Laserstrahl-Auftragsschweißen erfolgen.

Der erste Gradientenüberzug 8 weist eine erste Höhe 13 auf, welche senkrecht zur ersten Fügefläche 11 ist. Dabei ist der erste Gradientenüberzug 8 in verschiedene erste Höhenlagen bzw. erste Höhenschichten 21,22,23 unterteilt, welche parallel zur ersten Fügeoberfläche 11 sind. Der Gradientenüberzug 8 weist einen Gehalt an γ'-Phase auf, welcher senkrecht zur ersten Fügefläche 11, ausgehend von der Gradientenüberzugoberfläche 8a bis zu der ersten Fügefläche 11 zunimmt, solange bis der Gehalt der γ'-Phase des Gradientenüberzugs 8 nur noch geringe oder keine Abweichung vom dem Gehalt der γ'-Phase des ersten Fügepartners 1 aufweist. Dies bedeutet, dass die an der Fügefläche 11 anliegende Schicht 21 den gleichen (oder nahezu den gleichen) Gehalt an γ'-Phase aufweist wie der erste Fügepartner 1. In Richtung der Gradientenüberzugoberfläche 8a nimmt der Gehalt an γ'-Phase dann ab. So hat die der Schicht 21 nachfolgende Schicht 22 einen geringeren Gehalt an γ'-Phase und wiederum die dieser Schicht 22 nachfolgende Schicht 23 einen geringeren Gehalt an γ'-Phase als die Schicht 22 zuvor. Die Anzahl der Schichten ist nicht auf drei begrenzt; auch können sie sehr dünn sein, so dass sich, ausgehend von der erste Gradientenoberfläche 8a in Richtung erster Fügefläche 11, eine kontinuierliche Zunahme des Gehalts an γ'-Phase ergibt. FIG 1 zeigt zudem einen zweiten Fügepartner 2 mit einer zweiten Fügeoberfläche 12. Auch hier weist der zweite Fügepartner 2 einen hohen Gehalt an γ'-Phase auf. Dabei weisen der erste Fügepartner 1 und der zweite Fügepartner 2 denselben Gehalt an γ'-Phase auf. Auch hier wird die zweite Fügefläche 12 mit einem zweiten Gradientenüberzug 9 mit einer Gradientenüberzugoberfläche 9a beschichtet. Der zweite Gradientenüberzug 9 weist eine zweite Höhe 14 auf, welche senkrecht zur ersten Fügefläche 12 ist. Dabei sind die erste Höhe 13 und die zweite Höhe 14 gleich. Sie können aber auch ungleich sein. Dabei ist der zweite Gradientenüberzug 9 ebenfalls in verschiedene Höhenlagen bzw. Höhenschichten 31,32,33 unterteilt, welche parallel zur zweiten Fügeoberfläche 12 sind. Der zweite Gradientenüberzug 9 weist einen Gehalt an γ'-Phase auf, welcher senkrecht zur zweiten Fügefläche 12 ausgehend von der Gradientenüberzugoberfläche 9a bis zu der zweiten Fügefläche 12 zunimmt, solange bis der Gehalt der γ'-Phase des Gradientenüberzugs 9 nur noch geringe oder keine Abweichung vom dem Gehalt der γ'-Phase des zweiten Fügepartners 12 aufweist. Dies bedeutet, dass die an der Fügefläche 12 anliegende Schicht 31 den gleichen (oder nahezu den gleichen) Gehalt an γ'-Phase aufweist wie der zweite Fügepartner 12. In Richtung der Gradientenüberzugoberfläche 9a nimmt der Gehalt an γ'-Phase dann ab. So hat die der Schicht 31 nachfolgende Schicht 32 einen geringeren Gehalt an γ'-Phase und wiederum die dieser Schicht 32 nachfolgende Schicht 33 einen geringeren Gehalt an γ'-Phase als die Schicht 32 zuvor. Die Anzahl der Schichten ist auch hier nicht auf drei begrenzt; auch können sie sehr dünn sein, so dass sich, ausgehend von der zweiten Gradientenoberfläche 9a in Richtung zweiter Fügefläche 12, eine kontinuierliche Zunahme des Gehalts an γ'-Phase ergibt. Dabei haben der erste Fügepartner 1 und der zweite Fügepartner 2 denselben Gehalt an γ'-Phase, ebenso die den Fügepartnern 1,2 nachfolgende Schicht 21 bzw. 31. Auch die der Schicht 21 bzw. 31 nachfolgende Schicht 32 bzw.32 als auch die dieser Schicht 22 bzw. 32 nachfolgende Schicht 23 bzw. 33 weisen den gleichen Gehalt an γ'-Phase auf. Dies ist jedoch nicht zwingend erforderlich wie FIG 2 zeigt.

FIG 2 zeigt einen ersten Fügepartner 1 sowie einen ersten Gradientenüberzug 8 wie in FIG 1. FIG 2 zeigt jedoch einen zweiten Fügepartner 20 mit einer zweiten Fügeoberfläche 120. Auch hier wird die zweite Fügefläche 120 mit einem zweiten Gradientenüberzug 90 mit einer Gradientenüberzugoberfläche 90a beschichtet. Der zweite Gradientenüberzug 90 weist eine zweite Höhe 15 auf, welche senkrecht zur ersten Fügefläche 120 ist. Dabei ist der zweite Gradientenüberzug 90 ebenfalls in verschiedene zweite Höhenschichten 310,320,330 unterteilt, welche parallel zur zweiten Fügeoberfläche 120 sind. Der zweite Gradientenüberzug 90 weist einen Gehalt an γ'-Phase auf, welcher senkrecht zur zweiten Fügefläche 120 ausgehend von der Gradientenüberzugoberfläche 90a bis zu der zweiten Fügefläche 120 zunimmt, solange bis der Gehalt der γ'-Phase des Gradientenüberzugs 90 nur noch geringe oder keine Abweichung von dem Gehalt der γ'-Phase des zweiten Fügepartners 120 aufweist. Dies bedeutet, dass die an der Fügefläche 120 anliegende Schicht 310 den gleichen (oder nahezu den gleichen) Gehalt an γ'-Phase aufweist wie der zweite Fügepartner 120. In Richtung der Gradientenüberzugoberfläche 90a nimmt der Gehalt an γ'-Phase dann ab. So hat die der Schicht 310 nachfolgende Schicht 320 einen geringeren Gehalt an γ'-Phase und wiederum die dieser Schicht 320 nachfolgende Schicht 330 einen geringeren Gehalt an γ'-Phase als die Schicht 320 zuvor. Die Anzahl der Schichten ist auch hier nicht auf drei begrenzt; auch können sie sehr dünn sein, so dass sich, ausgehend von der zweiten Gradientenoberfläche 90a in Richtung zweiter Fügefläche 120, eine kontinuierliche Zunahme des Gehalts an γ'-Phase ergibt. Dabei haben der erste Fügepartner 1 und der zweite Fügepartner 20 einen unterschiedlich hohen Gehalt an γ'-Phase, ebenso die den Fügepartner 1,20 nachfolgende Schicht 21 bzw. 310. Auch die den Schichten 21 und 310 nachfolgenden Schichten 22 und 320 als auch die diesen Schichten 22 und 320 nachfolgenden Schichten 23 und 330 weisen einen unterschiedlichen Gehalt an γ'-Phase auf.

Beim Reibschweißvorgang wird nun eine Kraft 5 in eine Schwingungsrichtung 4 ausgeübt.

Während des Reibschweißvorgangs werden die Schichten mit geringerer γ'-Phase abgerieben und lagern sich als Abrieb (SHAFT) im Randbereich der Fügeflächenzone ab. Dies sind im Wesentlichen die Schichten 23,22 des ersten Fügepartners 1 und die Schichten 33,32 des zweiten Fügepartners 2 in FIG 1 und die Schichten 23,22 des ersten Fügepartners 1 und die Schichten 330,320 des zweiten Fügepartners 20 in FIG 2. Der Randbereich wird anschließend nachbearbeitet und die Ablagerungen durch die abgeriebenen Schichten 22,23,33,32 bzw. 22,23,330,320 entfernt.

Durch den Abrieb nimmt jedoch die Belastung sowohl der Werkzeugmaschinen als auch der Fügepartner 1,2 bzw. 1,120 kontinuierlich zu, da sich der Gehalt an γ'-Phase im reibenden Gefüge erhöht. Erreicht die Belastung einen kritischen Punkt, welcher vorab festgelegt werden kann, so wird der Fügevorgang unterbrochen und die beiden Fügepartner 1,2 bzw. 1,120 werden über eine Anpresskraft 5 gefügt. Vorteilhaft ist auch, dass der Teil des Gradientenüberzugs 8,9 bzw. 8,90 mit hohem Gehalt an γ'-Phase zudem erst gegen Ende des Fügeprozesses gefügt werden, so dass bereits eine hohe Fügetemperatur erreicht worden ist. Dadurch ist die Belastung für die Werkzeugmaschinen, welche den Reibprozess durchführen, und für die Fügepartner 1,2 bzw. 1,120 wesentlich geringer; der Fügeprozess kann damit länger fortgeführt werden. Somit ergibt sich eine längere Lebensdauer der Werkzeugmaschinen. Auch kann die Steifigkeit der Werkzeugmaschinen verkleinert werden.

## Patentansprüche

1. Fügeverbindungsvorformling umfassend zumindest einen ersten Fügepartner (1) mit einer ersten Fügefläche (11) und einen zweiten Fügepartner (2,20) mit einer zweiten Fügefläche (12,120), welche zur Fügung an der erste Fügeflächen (11) vorgesehen ist, wobei der erste Fügepartner (1) einen ersten Gehalt an härtender intermetallischer Phase umfasst, **dadurch gekennzeichnet, dass**
- der zweite Fügepartner (2,20) einen zweiten Gehalt an härtender intermetallischer Phase umfasst,
- auf der ersten Fügefläche (11) ein erster Gradientenüberzug (8) mit einer ersten Gradientenüberzugoberfläche (8a) aufgebracht ist, wobei der erste Gradientenüberzug (8) einen Gehalt an härtender intermetallischer Phase aufweist, welcher senkrecht zur ersten Fügefläche (11) ausgehend von der ersten Gradientenüberzugoberfläche (8a) bis zu der ersten Fügefläche (11) zunimmt, solange bis der Gehalt an härtender intermetallischer Phase des ersten Gradientenüberzugs (8) nur noch geringe oder keine Abweichung von dem ersten Gehalt an härtender intermetallischer Phase des ersten Fügepartners (1) aufweist.

2. Fügeverbindungsvorformling nach Anspruch 1, **dadurch gekennzeichnet, dass** die intermetallische Phase eine härtende γ'-Phase ist.

3. Fügeverbindungsvorformling nach Anspruch 1 oder 2, **dadurch gekennzeichnet, dass** auf der zweiten Fügefläche (12,120) ein zweiter Gradientenüberzug (9,90) mit einer zweiten Gradientenüberzugoberfläche (9a, 90a) vorgesehen ist, wobei der zweite Gradientenüberzug (9,90) einen Gehalt an härtender intermetallischer Phase aufweist, welcher senkrecht zur zweiten Fügefläche (12,120) ausgehend von der zweiten Gradientenüberzugoberfläche (9a, 90a) bis zu der zweiten Fügefläche (12,120) zunimmt, solange bis der Gehalt an härtender intermetallischer Phase des zweiten Gradientenüberzugs (9,90) nur noch geringe oder keine Abweichung mehr von dem Gehalt an härtender intermetallischer Phase des zweiten Fügepartners (2,120) aufweist.

4. Fügeverbindungsvorformling nach einem der vorhergehenden Ansprüche,
**dadurch gekennzeichnet, dass** der erste Gradientenüberzug (8) als eine Beschichtung der ersten Fügefläche (11) vorgesehen ist.

5. Fügeverbindungsvorformling nach Anspruch 4, **dadurch gekennzeichnet, dass** der zweite Gradientenüberzug (9,90) als eine Beschichtung der zweiten Fügefläche (12,120) vorgesehen ist.

6. Fügeverbindungsvorformling nach einem der vorhergehenden Ansprüche,
**dadurch gekennzeichnet, dass** bei dem ersten Gradientenüberzug (8) und/oder dem zweiten Gradientenüberzug (9,90) der Gehalt an härtender intermetallischer Phase, ausgehend von der Gradientenoberfläche (8a, 9a, 90a) in Richtung Fügefläche (11, 12, 120) kontinuierlich zunimmt.

7. Fügeverbindungsvorformling nach Anspruch 6, **dadurch gekennzeichnet, dass** der erste Gradientenüberzug (8) in Richtung erster Gradientenüberzugoberfläche (8a) eine erste Höhe (13) aufweist, wobei der Gehalt der härtenden intermetallischen Phase in jeder Höhenlage des ersten Gradientenüberzugs (8a) identisch ist.

8. Fügeverbindungsvorformling nach einem der vorhergehenden Ansprüche 6 oder 7,
**dadurch gekennzeichnet, dass** der zweite Gradientenüberzug (9,90) in Richtung zweiter Gradientenüberzugoberfläche (9a,90a) eine zweite Höhe (14,15) aufweist, und wobei der Gehalt der härtenden intermetallischen Phase in jeder Höhenlage des zweiten Gradientenüberzugs (9,90) identisch ist.

9. Verfahren zum Fügen mit den folgenden Schritten:
- Bereitstellen eines ersten Fügepartners (1) mit einer ersten Fügefläche (11), und mit einem ersten Gehalt an härtender intermetallischer Phase,
- Bereitstellen eines zweiten Fügepartners (2,20) mit einer zweiten Fügefläche (12,120) und mit einem zweiten Gehalt an härtender intermetallischer Phase,
- Anbringen eines ersten Gradientenüberzugs (8) mit einer ersten Gradientenüberzugoberfläche (8a) an der ersten Fügefläche (11) des ersten Fügepartners (1), wobei der erste Gradientenüberzug (8) einen Gehalt an intermetallischer Phase aufweist, welcher senkrecht zur ersten Fügefläche (11) ausgehend von der Gradientenüberzugoberfläche (8a) bis zu der ersten Fügefläche (11) zunimmt, solange bis der Gehalt an intermetallischer Phase des ersten Gradientenüberzugs (8) nur noch eine geringe oder keine Abweichung von dem ersten Gehalt an intermetallischer Phase des ersten Fügepartners (1) aufweist,
- Reiben des zweiten Fügepartners (2,20) mit dem ersten Gradientenüberzug (8) des ersten Fügepartners (1) und zwar dergestalt, dass beim Reiben der Teil des ersten Gradientenüberzugs (8) mit einem geringeren Gehalt an intermetallischer Phase als der erste Fügepartner (1) zumindest teilweise abgerieben wird, und zwar solange bis ein kritischer Belastungspunkt erreicht ist.

10. Verfahren zum Fügen nach Anspruch 9,
**dadurch gekennzeichnet, dass** als intermetallische Phase eine γ'-Phase bereitgestellt wird.

11. Verfahren zum Fügen nach Anspruch 9 oder 10, **dadurch gekennzeichnet, dass** auf der zweiten Fügefläche (12,120) ein zweiter Gradientenüberzug (9,90) mit einer zweiten Gradientenüberzugoberfläche (9a,90a) aufgebracht wird, wobei der zweite Gradientenüberzug (9,90) einen Gehalt an intermetallischer Phase aufweist, welcher senkrecht zur zweiten Fügefläche (12,120) ausgehend von der zweiten Gradientenüberzugoberfläche (9a,90a) bis zu der zweiten Fügefläche (12,120) zunimmt, solange bis der Gehalt an intermetallischer Phase des zweiten Gradientenüberzugs (9,90) nur noch geringe oder keine Abweichung mehr von dem Gehalt an intermetallischer Phase des zweiten Fügepartners (2,20) aufweist und
wobei der zweite Gradientenüberzug (9,90) mit dem ersten Gradientenüberzug (8) reibgeschweißt wird und zwar dergestalt, dass beim Reiben sowohl der Teil des ersten Gradientenüberzugs (8) mit einem geringeren Gehalt an intermetallischer Phase als der erste Fügepartner (1) zumindest teilweise abgerieben wird,
als auch der Teil des zweiten Gradientenüberzugs (9,90) mit einem geringeren Gehalt an intermetallischer Phase als der zweite Fügepartner (2,20) zumindest teilweise abgerieben wird, und zwar solange, bis ein kritischer Belastungspunkt erreicht ist.

12. Verfahren zum Fügen nach Anspruch 11,
**dadurch gekennzeichnet, dass** der erste Gradientenüberzug (8) einen intermetallischen Gehalt aufweist, welcher senkrecht zur ersten Fügefläche (11) ausgehend von der Gradientenüberzugoberfläche (8a) bis zu der ersten Fügefläche (11) kontinuierlich zunimmt, und der zweite Gradientenüberzug (9,90) einen Gehalt an intermetallischer Phase aufweist, welcher senkrecht zur zweiten Fügefläche (12,120) ausgehend von der zweiten Gradientenüberzugoberfläche (9a,90a) bis zu der zweiten Fügefläche (12,120) kontinuierlich zunimmt.

13. Verfahren zum Fügen nach einem der Ansprüche 9 bis 12, **dadurch gekennzeichnet, dass** beim Reiben das Material, welches durch den Abrieb des ersten Gradientenüberzugs (8) und/oder des zweiten Gradientenüberzugs (9,90) entsteht, in einem Randbereich der Fügeflächen (11,12,120) abgelagert wird.

14. Verfahren zum Fügen nach einem der Ansprüche 9 bis 13, **dadurch gekennzeichnet, dass** das Reiben durch lineares Reibschweißen vorgenommen wird.

15. Verbundwerkstück, welches mit einem Verfahren nach einem der Ansprüche 9 bis 14 hergestellt wurde, umfassend zumindest einen ersten Fügepartner (1) mit einer ersten Fügefläche (11) und einen zweiten Fügepartner (2,20) mit einer zweiten Fügefläche (12,120), wobei der erste Fügepartner (1) mit dem zweiten Fügepartner (2,20) verbunden ist, **dadurch gekennzeichnet, dass** der erste Fügepartner (1) als auch der zweite Fügepartner (2,20) einen hohen Gehalt an härtender intermetallischer Phase aufweisen und wobei sowohl der erste Fügepartner (1) als auch zweite Fügepartner (2,20) nach dem Reiben durch die Anwendung eines Gradientenüberzugs (8,9,90) auf zumindest einer der beiden Fügeflächen (11,12,120) lediglich geringe bis gar keine Beschädigung, insbesondere durch Rissbildung oder Schrumpfung, aufweisen.
